# EUROPÄISCHE PATENTSCHRIFT

(11) **EP 2 535 606 B1**
(45) Veröffentlichungstag und Bekanntmachung des Hinweises auf die Patenterteilung: **21.01.2015**
(21) Anmeldenummer: 12166613.5
(22) Anmeldetag: 03.05.2012
(51) Int. Cl.: F16C 17/04, F16C 33/10

(54) **Axiallageranordnung**
Axial bearing assembly
Agencement de palier axial

(30) Priorität: 17.06.2011 DE 102011077771
(43) Veröffentlichungstag der Anmeldung: 19.12.2012
(73) Patentinhaber: Bosch Mahle Turbo Systems GmbH & Co. KG, 70376 Stuttgart (DE)
(72) Erfinder: Laubender, Jochen, 71706 Markgröningen (DE)
(74) Vertreter: BRP Renaud & Partner mbB Rechtsanwälte Patentanwälte Steuerberater

(56) Entgegenhaltungen:
- EP-A1- 2 042 753
- DE-A1- 19 641 673
- DE-C- 487 677
- DE-C- 971 722

## Beschreibung

Die Erfindung bezieht sich auf eine hydrodynamische Axiallageranordnung mit einer im Wesentlichen planen Gleitfläche und einer davon durch einen Schmierspalt getrennten oder trennbaren Lagerfläche mit ringförmig angeordneten, jeweils eine Keil- und eine Rastfläche aufweisenden Segmenten.

Derartige Axiallageranordnungen sind aus der US 2011/0038716 A1 bekannt. Die Segmente sind bei dieser bekannten Axiallageranordnung auf beiden Seiten, das heißt auf der Vorder- und der Rückseite einer Axiallagerscheibe, die axial zwischen zwei relativ zueinander beweglichen Gleitflächen angeordnet ist, jeweils in einem Ringkanal angeordnet, der beim Betrieb der Axiallageranordnung mit hydraulischem Schmiermittel gefüllt wird, welches aufgrund hydrodynamischer Effekte zwischen den Keilflächen der Segmente und der zugewandten Gleitfläche der Welle bzw. des Gehäuses eingequetscht und dann zwischen der an die Keilfläche anschließenden Rastfläche und der Gleitfläche einen tragenden Quetschfilm bildet. Dieser verhindert eine unmittelbare Berührung zwischen Bereichen der Axiallagerscheibe und der benachbarten Gleitfläche der Welle oder des Gehäuses. Gemäß der US 2011/0038716 A1 sind die Segmente auf der Vorderseite der Axiallagerscheibe in Umfangsrichtung versetzt gegenüber den Segmenten auf der Rückseite der Axiallagerscheibe angeordnet. Dadurch soll der Verschleiß der Werkzeuge bei Herstellung der Axiallagerscheibe vermindert werden.

Bei Axiallagern von Turboladern muss berücksichtigt werden, dass sowohl das Turbinen- als auch das Verdichterrad beim Laderbetrieb aufgrund unvermeidlicher Unwuchten und/oder aerodynamischer Effekte zu Taumelbewegungen angeregt werden können. Diese Taumelbewegungen übertragen sich auf die Welle, mit der Folge, dass die wellenseitigen Gleitflächen relativ zur Axiallagerscheibe taumeln können. Damit verändern sich die Spaltmaße zwischen der wellenseitigen Gleitfläche und den Segmenten. Dies kann dazu führen, dass die Tragkraft des vom hydraulischen Schmiermittel gebildeten Quetschfilmes zwischen einem Segment und der benachbarten wellenseitigen Gleitfläche unerwünscht absinkt und eine unmittelbare Berührung der Gleitfläche mit dem Segment zur Folge haben kann.

Zur Lösungen dieses Problems lässt sich im Stand der Technik keinerlei Anregung finden.

Die DE 971722 betrifft ein sogenanntes Spurlager für große Lasten, insbesondere Wasserkraftgeneratoren, wobei für das Lager ein typischer Außendurchmesser von 3 m angegeben wird. Dabei trennt ein Schmierfilm einen Tragring von einem relativ dazu rotierenden Spurklotzring, der seinerseits auf einem Spurring angeordnet ist. Der Spurklotzring besitzt eine segmentierte Lagerfläche, wobei die Lagerflächensegmente ggf. mehrere konzentrische Ringe bilden können. Diese Ringe werden durch einen umlaufenden Ringkanal voneinander getrennt, der seinerseits durch ein Ringblech unterteilt ist, so dass für die konzentrischen Spurklotzringe separate Schmierölbereiche geschaffen werden.

Auf diese Weise soll die Schmierölzu- und -abführung an den Spurklotzringen verbessert werden. Auch die DE 487677 bezieht sich offenbar auf eine Axial-Gleitlageranordnung für Großmaschinen. Eine wellenseitige Lagerfläche wird durch einen Schmierfilm von Tragflächensegmenten getrennt, die in zumindest zwei konzentrischen Kreisringen angeordnet sein können und über Kugeln auf einem Tragring abgestützt sind, welcher ein waagebalkenartiges Profil aufweist, so dass ein radial inneres Tragflächensegment relativ zu einem radial äußeren Tragflächensegment eine in Axialrichtung der Welle entgegengesetzte Bewegung auszuführen vermag. Auf diese Weise wird bei sehr großen Lagerabmessungen eine Anpassung der Lagen der Tragflächensegmente an die sich unter Belastung verändernde Form der wellenseitigen Lagerfläche ermöglicht.

Rast- und Keilflächen sind also weder an den Spurklotzflächen der DE971722 noch an den Tragflächensegmenten der DE487677 erkennbar.

Die DE 19641673 A1 steht zwar im Zusammenhang mit der Axiallagerung der Welle eines Turboladers, wobei alle Merkmale des Oberbegriffs des Anspruchs 1 Ihrer Anmeldung vorliegen. Jedoch wird keinerlei Hinweis auf die kennzeichnenden Merkmale gegeben.

Deshalb ist es Aufgabe der Erfindung, für Turbolader eine Axiallageranordnung zu schaffen, bei der auch unter extremen Bedingungen eine hydrodynamische Axiallagerung gewährleistet wird.

Diese Aufgabe wird bei einer Axiallageranordnung der eingangs angegebenen Art dadurch gelöst, dass die Segmente in zumindest zwei konzentrischen Ringzonen angeordnet sind.

Insbesondere ist dabei vorgesehen, dass die Segmente benachbarter Ringzonen in Umfangsrichtung zueinander versetzt sind.

Durch die in mehreren Zonen angeordneten Segmente sowie durch deren vorzugsweise in Umfangsrichtung versetzte Anordnung wird ein Netzwerk hydrodynamischer Abstützungsbereiche geschaffen, mit der Folge, dass eventuelle Taumelbewegungen der wellenseitigen Gleitfläche wirksam bedämpft werden und eine unmittelbare Berührung der Gleitfläche mit Teilen der Segmente ausgeschlossen werden kann.

In der Zeichnung zeigt
- Fig. 1: eine Achsansicht einer erfindungsgemäß ausgestalteten Axiallagerscheibe, und
- Fig. 2: eine weitere Achsansicht einer abgewandelten Ausführungsform.

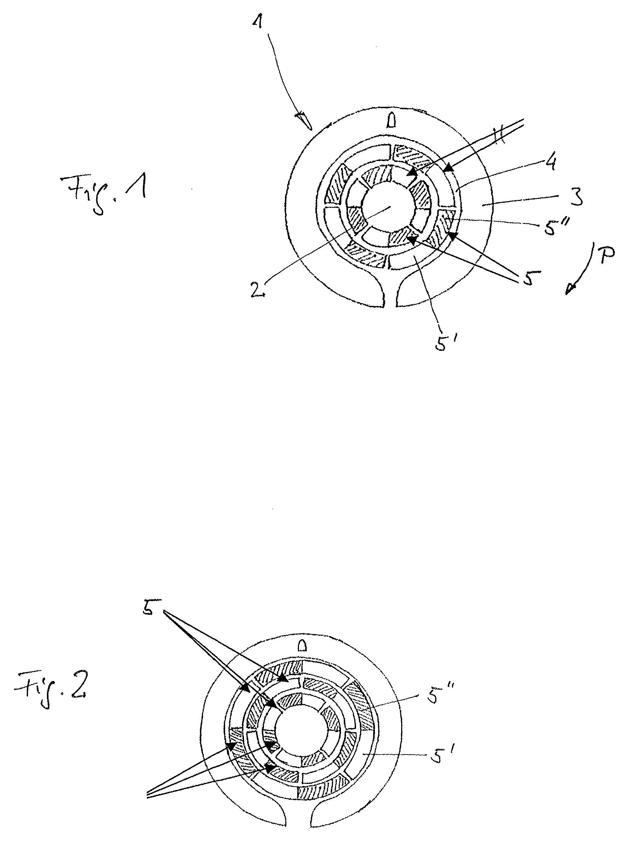

Die in Figur 1 dargestellte Axiallagerscheibe 1 besitzt in üblicher Weise eine Zentralöffnung 2, die bei montierter Axiallageranordnung von der axial zu lagernden Welle (nicht dargestellt) durchsetzt wird. Dabei möge nun die in Figur 1 sichtbare Stirnseite der Axiallagerscheibe 1 einem wellenseitigen Bund mit wellenseitiger Gleitfläche zugewandt sein, während die in Figur 1 nicht sichtbare Stirnseite der Axiallagerscheibe 1 einer relativ stationären, insbesondere gehäuseseitigen Gleit- bzw. Lagerfläche zugewandt ist. Es versteht sich, dass die vorgenannte Welle zusätzlich radial gelagert ist, wobei die entsprechenden Radiallager in der Draufsicht der Figur 1 oberhalb der sichtbaren Stirnseite der Axiallagerscheibe 1 angeordnet sein können.

Radial zwischen der Zentralöffnung 2 und einer radial äußeren Ringfläche 3 ist eine gegenüber der Ringfläche 3 vertiefte Segmentzone 4 vorgesehen, innerhalb der Segmente 5 in zwei zur Zentralöffnung 2 konzentrischen Ringzonen angeordnet sind. Diese Segmente 5 besitzen jeweils eine Rastfläche 5' sowie eine Keilfläche 5". Die Rastflächen 5' erstrecken sich in einer gemeinsamen Radialebene, während die Keilflächen 5" in Pfeilrichtung P von einem gegenüber der Radialebene der Rastflächen 5' tieferen Niveau rampenartig zu den Rastflächen 5' ansteigen.

Beim Rotationsbetrieb der Welle wird die Segmentzone 5 mit fluidischem, insbesondere hydraulischem Schmiermittel verfüllt. Wenn sich nun die Welle mit ihrem Bund relativ zur Axiallagerscheibe in Pfeilrichtung P dreht, wird Schmiermittel innerhalb des sich in Pfeilrichtung P verengenden Spaltes zwischen den Keilflächen 5" und dem zugewandten Wellenbund mitgeschleppt, mit der Folge, dass sich zwischen dem Wellenbund und den Rastflächen 5' jeweils tragfähige Quetschfilme des Schmiermittels bilden.

Sollte die Welle und damit der Wellenbund relativ zur Axiallagerscheibe 1 aufgrund von Unwuchten oder sonstigen Störkräften Taumelbewegungen ausführen, hat dies zwangsläufig zur Folge, dass die Dicken der Quetschfilme unterschiedliche Werte annehmen. Bei herkömmlichen Axiallageranordnungen, bei denen die Segmente 5 jeweils nur in einer einzigen Ringzone angeordnet sind, können die Taumelbewegungen dazu führen, dass der Quetschfilm an einem der Segmente 5 eine zulässige minimale Dicke unterschreitet und damit seine Tragkraft verliert, so dass eine unmittelbare Berührung eines Wellenteiles mit einem Teil der Axiallagerscheibe 1 ermöglicht wird.

Bei der Erfindung dagegen sind die Segmente in mehreren Ringzonen vorgesehen. Dies hat überraschenderweise zur Folge, dass immer an einer hinreichenden Anzahl von Segmenten 5 ein ausreichend dicker und damit tragfähiger Quetschfilm zur Verfügung steht und Berührungen zwischen Welle und Axiallagerscheibe ausgeschlossen werden. Im Übrigen wird durch die bei der Erfindung mögliche breite Abstützbasis, die durch die in mehreren Ringzonen angeordneten Segmente gewährleistet wird, eine verbesserte Dämpfung von Relativbewegungen zwischen Welle und Axiallagerscheibe erreicht.

Als vorteilhaft für die Vermeidung unmittelbarer Kontakte zwischen Axiallagerelementen hat sich auch die aus Figur 1 ersichtliche versetzte Anordnung der Segmente in den beiden Ringzonen herausgestellt. In Radialrichtung liegt jeweils eine Keilfläche eines Segmentes der einen Ringzone neben einer Rastfläche eines Segmentes der benachbarten Ringzone. Im Übrigen sind die Segmente in benachbarten Ringzonen jeweils innerhalb eines gleichen Umfangswinkels angeordnet, das heißt die Segmente in einer radial äußeren Ringzone haben eine entsprechend größere Länge in Umfangsrichtung. Dies führt bei den Keilflächen zu entsprechend verminderten Keilwinkeln.

Die Figur 2 zeigt eine besonders bevorzugte Ausführungsform, bei der die Segmente 5 in drei konzentrischen Ringzonen angeordnet sind.

Im Übrigen sind die Segmente 5 benachbarter Ringzonen in beiden Ausführungsformen in Umfangsrichtung versetzt zueinander angeordnet, etwa derart, dass die Keilfläche eines Segmentes radial benachbart zur Rastfläche des Segmentes in der Nachbarringzone liegt. Dies bedeutet gleichzeitig, dass die Segmente benachbarter Ringzone zwar jeweils gleiches Bogenmaß aufweisen, jedoch in Umfangsrichtung unterschiedliche Längen besitzen.

Die zeichnerisch dargestellten Ausführungsformen haben sich als vorteilhaft herausgestellt. Gleichwohl sind die dargestellten Merkmalskombinationen nicht zwingend.

Zunächst kann die Anzahl der Segmente 5 bei Beibehaltung der (dargestellten) Flächenverhältnisse zwischen den Rast- und Keilflächen 5' und 5" verändert werden, d. h., die Gesamtfläche der Rastflächen 5' einerseits und die Gesamtfläche der Keilflächen 5" andererseits bleiben unverändert und verteilen sich lediglich auf eine andere Anzahl der Segmente 5. Außerdem kann die Anzahl der Segmente 5 auf den zueinander konzentrischen Segmentbahnen unterschiedlich sein, des weiteren können die Segmente auf unterschiedlichen Segmentbahnen auch unterschiedliche Bogenmaße aufweisen. Darüber hinaus ist es auch möglich, innerhalb einer oder mehrerer der Segmentbahnen Segmente 5 mit voneinander abweichenden Bogenmaßen vorzusehen, wobei auch das Flächenverhältnis zwischen Keil- und Rastfläche eines jeweiligen Segmentes in der Segmentbahn unterschiedlich sein kann. Dadurch lässt sich das Tragverhalten optimieren, und zwar bei gleichzeitig minimaler akustischer Anregungen oder Instabilität.

Auch die Bogenabstände zwischen in Umfangsrichtung aufeinander folgenden Segmenten können variiert werden, gegebenenfalls derart, dass die Anzahl der Keil- und Rastflächen pro Teilkreis unterschiedlich ist. Schließlich können alle Funktionsflächen, insbesondere die Keil- und Rastflächen, mit einer definierten Oberflächenstruktur ausgebildet sein, z. B. als gehonte, feingedrehte oder gestanzte Oberflächen bzw. solche mit Kreuzschliff oder Profilierungen, wie Längs-, Quer-, Diagonalrillen oder eckige oder ovale Vertiefungen oder Erhöhungen. Dadurch lässt sich die Quetschfilmströmung zwischen den Funktionsflächen eines Axiallagers gezielt in Hinsicht auf eine Dämpfung akustischer Anregungen oder eine Erhöhung der Stabilität beeinflussen.

## Patentansprüche

1. Hydrodynamische Axialgleitlageranordnung für die Welle eines Turboladers mit einer im Wesentlichen planen Gleitfläche und einer davon durch einen Schmierspalt getrennten und/oder trennbaren Lagerfläche mit ringförmig angeordneten, jeweils eine Keil- und eine Rastfläche aufweisenden Segmenten (5), **dadurch gekennzeichnet,**
**dass** die Segmente (5) in zumindest zwei koaxialen Ringzonen angeordnet sind.

2. Axialgleitlageranordnung nach Anspruch 1,
**dadurch gekennzeichnet,**
**dass** die Segmente radial benachbarter Ringzonen in Umfangsrichtung versetzt zueinander angeordnet sind.

3. Axialgleitlageranordnung nach Anspruch 2,
**dadurch gekennzeichnet,**
**dass** jeweils eine Keilfläche (5") eines Segmentes (5) der einen Ringzone radial benachbart zur Rastfläche (5') eines Segmentes in der Nachbarringzone angeordnet ist.

4. Axialgleitlageranordnung nach Anspruch 2 oder 3,
**dadurch gekennzeichnet,**
**dass** die Segmente (5) benachbarter Ringzonen jeweils gleiche Bogenmaße besitzen.

5. Axialgleitlageranordnung nach Anspruch 2 oder 3,
**dadurch gekennzeichnet,**
**dass** Segmente (5) benachbarter Ringzonen unterschiedliche Bogenmaße aufweisen.

6. Axialgleitlageranordnung nach einem der Ansprüche 1 bis 5,
**dadurch gekennzeichnet,**
**dass** die Lagerfläche auf einer Axiallagerscheibe (1) angeordnet ist.

7. Axialgleitlageranordnung nach einem der Ansprüche 1 bis 6,
**dadurch gekennzeichnet,**
**dass** beidseitig auf der Axiallagerscheibe (1) gleichartige Lagerflächen vorgesehen sind.

8. Axialgleitlageranordnung nach einem der Ansprüche 1 bis 7,
**dadurch gekennzeichnet,**
**dass** Funktionsflächen (5', 5") eine vorgegebene Oberflächenstruktur aufweisen.

## Claims

1. A hydrodynamic axial slide bearing arrangement for the shaft of a turbocharger with a substantially flat sliding surface and a bearing surface with annularly arranged segments (5) in each case having a wedge surface and an engagement surface which is separated and/or can be separated by a lubricating gap from said sliding surface, **characterized in that** the segments (5) are arranged in at least two coaxial annular zones.

2. The axial slide bearing arrangement according to Claim 1, **characterized in that** the segments of radially adjacent annular zones are arranged in circumferential direction offset from one another.

3. The axial slide bearing arrangement according to Claim 2, **characterized in that** in each case a wedge surface (5") of a segment (5) of the one annular zone is arranged radially adjacent to the engagement surface (5') of a segment in the neighbouring annular zone.

4. The axial slide bearing arrangement according to Claim 2 or 3, **characterized in that** the segments (5) of adjacent annular zones each have same radian measures.

5. The axial slide bearing arrangement according to any Claim 2 or 3, **characterized in that** segments (5) of adjacent annular zones have differing radian measures.

6. The axial slide bearing arrangement according to any one of the Claims 1 to 5, **characterized in that** the bearing surface is arranged on an axial bearing disc (1).

7. The axial slide bearing arrangement according to any one of the Claims 1 to 6, **characterized in that** on both sides on the axial bearing disc (1) bearing surfaces of the same type are provided.

8. The axial slide bearing arrangement according to any one of the Claims 1 to 7, **characterized in that** function surfaces (5', 5") have a predetermined surface texture.

## Revendications

1. Dispositif de palier lisse axial hydrodynamique pour l'arbre d'un turbocompresseur comportant une surface coulissante essentiellement plane et une surface de palier séparée et/ou séparable par une rainure de lubrification avec des segments (5) disposés de manière annulaire, présentant respectivement une surface de coin et une surface d'encliquetage, **caractérisé en ce que** les segments (5) sont disposés dans au moins deux zones annulaires coaxiales.

2. Dispositif de palier lisse axial selon la revendication 1, **caractérisé en ce que** les segments sont disposés dans ses zones annulaires voisines radialement décalées les unes des autres dans la direction circonférentielle.

3. Dispositif de palier lisse axial selon la revendication 2, **caractérisé en ce que** respectivement une surface de coin (5") d'un segment (5) d'une des zones annulaires est disposé en étant voisin radialement de la surface d'encliquetage (5') d'un segment dans la zone annulaire voisine.

4. Dispositif de palier lisse axial selon la revendication 2 ou 3, **caractérisé en ce que** les segments (5) des zones annulaires voisines possèdent des mesures d'arc respectivement identiques.

5. Dispositif de palier lisse axial selon la revendication 2 ou 3, **caractérisé en ce que** les segments (5) des zones annulaires voisines présentent des mesures d'arc différentes.

6. Dispositif de palier lisse axial selon une des revendications 1 à 5, **caractérisé en ce que** la surface de palier est disposée sur un disque de palier axial (1).

7. Dispositif de palier lisse axial selon une des revendications 1 à 6, **caractérisé en ce que** des deux côtés du disque de palier lisse (1) des surfaces de palier identiques sont prévues.

8. Dispositif de palier lisse axial selon une des revendications 1 à 7, **caractérisé en ce que** les surfaces fonctionnelles (5',5'') présentent une structure de surface prescrite.
